# EUROPÄISCHE PATENTANMELDUNG

(11) **EP 3 511 099 A1**
(43) Veröffentlichungstag der Anmeldung: **17.07.2019**
(21) Anmeldenummer: 18215083.9
(22) Anmeldetag: 21.12.2018
(51) Int. Cl.: B23D 53/00, B23D 55/08

(54) **BANDSÄGEMASCHINE**

(30) Priorität: 10.01.2018 DE 102018100457
(71) Anmelder: August Moessner GmbH & Co. KG., 73569 Eschach (DE)
(72) Erfinder: Kunz, Christian, 73569 Eschach (DE)
(74) Vertreter: Schmid, Wolfgang

(57) **Zusammenfassung**

Eine Bandsägemaschine (1) weist zwei in vertikaler Richtung (z) übereinander angeordnete Umlenkrollen (3), ein um die Umlenkrollen (3) geführtes, endloses Sägeband (4), das einen nach oben laufenden Abschnitt (4a) und einen nach unten laufenden Abschnitt (4b) aufweist, und ein Maschinengestell (2) auf, das einen Sägehals (5) zum Halten von wenigstens der oberen Umlenkrolle (3) aufweist. Die Umlenkrollen (3) sind im Wesentlichen parallel zu einer Vorderkante (6) des Maschinengestells (2) angeordnet, sodass sowohl der nach oben laufende Abschnitt (4a) als auch der nach unten laufende Abschnitt (4b) des Sägebands (4) mit ihren Schneiden der Vorderkante (6) zugewandt sind. Der Sägehals (5) ist gegenüber den Umlenkrollen (3) von der Vorderkante (6) nach hinten versetzt angeordnet. Sowohl der nach oben laufende Abschnitt (4a) als auch der nach unten laufende Abschnitt (4b) des Sägebands (4) ist zwischen den Umlenkrollen (3) zumindest teilweise freigelegt.

## Beschreibung

Die Erfindung betrifft eine Bandsägemaschine mit zwei in vertikaler Richtung übereinander angeordneten Umlenkrollen, mit einem um die Umlenkrollen geführten, endlosen Sägeband, das einen nach oben laufenden Abschnitt und einen nach unten laufenden Abschnitt aufweist, und mit einem Maschinengestell, das einen Sägehals zum Halten von wenigstens der oberen Umlenkrolle aufweist.

Gattungsgemäße Bandsägemaschinen sind aus dem allgemeinen Stand der Technik bekannt. Diese werden auch als Vertikalbandsägen bezeichnet, da ihre Umlenkrollen, um die das Sägeband umläuft, in vertikaler Richtung übereinander angeordnet sind. Die Umlenkrollen sind meist senkrecht zu einer dem Benutzer der Bandsägemaschine zugewandten Vorderkante des Maschinengestells angeordnet, wobei üblicherweise ein nach unten laufender Abschnitt des Sägebands der Vorderkante zugewandt ist und ein nach oben laufender Abschnitt des Sägebands sich in einem hinteren Bereich des Maschinengestells befindet. Auf diese Weise soll dem Benutzer eine einfache Zugänglichkeit zu dem Sägeband ermöglicht werden.

Teilweise werden solche Bandsägemaschinen zum automatisierten Sägen von größeren Werkstücken, wie beispielsweise Gussteilen, eingesetzt. Das zu sägende Werkstück wird dabei häufig von einem Mehrachsenroboter gehalten und relativ zu dem Sägeband bewegt. Um dem Mehrachsenrobotern die erforderliche Bewegungsfreiheit zu verschaffen, werden die Bandsägemaschinen in unterschiedlichen Ausführungen eingesetzt, wobei sie in Abhängigkeit von der Position des die obere Umlenkrolle haltenden Sägehalses in linke und rechte Ausführungen unterschieden werden.

Insbesondere der automobile Leichtbau trägt zunehmend zur Steigerung der Komplexität von Gussteilen bei. Des Weiteren steigen aufgrund der Anzahl unterschiedlicher zu bearbeitender Ausführungen von Gussteilen die Anforderungen hinsichtlich der Flexibilität solcher mit Mehrachsenrobotern zusammenarbeitender Bandsägemaschinen. Die unterschiedlichen Ausführungen der Werkstücke erfordern häufig auch die größere Anzahl an Freiheitsgraden der oben genannten linken und rechten Ausführungen von Bandsägemaschinen.

Dies führt in der Praxis teilweise dazu, dass in einer von einem Mehrachsenroboter versorgten Sägezelle zwei Bandsägemaschinen eingesetzt werden, von denen dann eine in einer linken und die andere in einer rechten Ausführung ausgebildet ist. Dadurch ergibt sich nicht nur ein erhöhter Bedarf an Bandsägemaschinen und damit ein erhöhter Kostenaufwand, sondern auch ein erhöhter Platzbedarf.

Ein weiteres Problem bei den bekannten Bandsägemaschinen besteht häufig darin, dass zwischen dem Sägeband und dem Sägehals meist nur ein sehr geringer Freiraum vorhanden ist, was die Beweglichkeit des Mehrachsenroboters und die Größe des zu sägenden Werkstücks beschränkt. Allerdings kann der Abstand zwischen dem Sägehals und dem Sägeband nicht beliebig verändert werden, da dies nur über eine entsprechende Vergrößerung des Durchmessers der Umlenkrollen möglich ist, was wiederum die gesamte Bandsägemaschine vergrößert und damit den Platzbedarf weiter erhöht.

In der DE 40 05 143 A1 ist eine Vertikalbandsäge beschrieben, bei welcher der beide Umlenkrollen tragende Sägehals um eine vertikale Drehachse schwenkbar ist. Dadurch sollen in einfacher Weise auch Gehrungsschnitte durchgeführt werden können. Eine solche Bandsägemaschine ist jedoch zum einen sehr komplex und bietet zum anderen gerade beim automatisierten Sägen keine großen Vorteile, da Gehrungsschnitte auch durch eine entsprechende Positionierung des Werkstücks mittels des Mehrachsenroboters erreicht werden können.

Es ist daher Aufgabe der vorliegenden Erfindung, eine Bandsägemaschine zu schaffen, die insbesondere, jedoch nicht ausschließlich im Falle des gemeinsamen Einsatzes mit einem oder mehreren Mehrachsenrobotern dem- bzw. denselben eine höhere Flexibilität ermöglicht.

Erfindungsgemäß wird diese Aufgabe durch die in Anspruch 1 genannten Merkmale gelöst.

Durch die erfindungsgemäße Anordnung der beiden Umlenkrollen im Wesentlichen parallel zu der Vorderkante des Maschinengestells und so, dass die Schneiden sowohl des nach oben als auch des nach unten laufenden Abschnitts des Sägebands der Vorderkante zugewandt sind, liegen beide Abschnitte des Sägebands frei, sodass mit beiden Abschnitten Werkstücke gesägt werden können. Dadurch ergibt sich eine erheblich bessere Nutzbarkeit der erfindungsgemäßen Bandsägemaschine, da an ein und demselben Sägeband im Prinzip zwei Werkstücke gleichzeitig gesägt werden können.

Des Weiteren verbindet die erfindungsgemäße Lösung aufgrund der durch die Positionierung der Umlenkrollen erreichten Anordnung des Sägebands die Vorteile einer linken und einer rechten Ausführung einer Bandsägemaschine miteinander, was zu einer weiteren Erhöhung der Freiheitsgrade beim Einsatz der Bandsägemaschine und einer damit verbundenen einfacheren Bearbeitbarkeit der unterschiedlichsten Werkstücke führt. Auf diese Weise kann die erfindungsgemäße Bandsägemaschine besser genutzt werden, wodurch insbesondere gegenüber dem gleichzeitigen Einsatz zweier Maschinen Kosten eingespart werden können.

Dadurch, dass erfindungsgemäß der Sägehals gegenüber den Umlenkrollen nach hinten versetzt ist, ergibt sich sehr viel Raum zwischen dem Sägeband und dem Sägehals sowie links von dem nach oben und rechts von dem nach unten laufenden Abschnitt des Sägebands, sodass auch komplexe und/oder große Werkstücke in einfacher Weise zwischen dem Sägeband und dem Sägehals gesägt werden können. Auch zwischen den beiden Abschnitten des Sägebands kann sich auf diese Weise ein großer Freiraum ergeben, der die Handhabung der Werkstücke vereinfacht.

Dabei ist das Sägeband durch seine Anordnung im Bereich der Vorderkante des Maschinengestells stets sehr einfach zugänglich, was die Bearbeitung der Werkstücke noch weiter vereinfacht.

In einer sehr vorteilhaften Weiterbildung der Erfindung kann vorgesehen sein, dass die Umlenkrollen um weniger als 20 cm, vorzugsweise um weniger als 10 cm, gegenüber der Vorderkante des Maschinengestells nach hinten versetzt angeordnet sind. Durch das Versetzen der Umlenkrollen nach hinten können von einem zu sägenden Werkstück abgetrennte Teile durch die Vorderkante der Bandsäge, die in diesem Fall durch ein Späneleitblech gebildet ist, besser aufgenommen werden.

Um die bei der Bearbeitung entstehenden Späne auf einfache und zuverlässige Art und Weise entsorgen zu können, kann des Weiteren vorgesehen sein, dass zwischen den Umlenkrollen ein im Wesentlichen parallel zu der Vorderkante des Maschinengestells verlaufendes Förderband angeordnet ist.

Dabei kann vorgesehen sein, dass das Förderband im Wesentlichen horizontal ausgerichtet ist, wodurch Späne und abgesägte Teile sehr einfach abtransportiert werden können.

Des Weiteren kann vorgesehen sein, dass das Sägeband in dem der oberen Umlenkrolle zugewandten Bereich an Führungsarmen geführt ist, wodurch sich eine sehr gute Führung des Sägebands und dadurch eine exakte Bearbeitung der Werkstücke ergibt.

In diesem Zusammenhang kann vorgesehen sein, dass die Führungsarme mittels jeweiliger Antriebseinrichtungen verstellbar sind. Dadurch lässt sich die Führung des Sägebands auf sehr einfache Weise verändern.

Um einen für die Bearbeitung größerer Werkstücke vorteilhaften großen Abstand zwischen den beiden in entgegengesetzten Richtungen verlaufenden Abschnitten des Sägebands zu schaffen, kann des Weiteren vorgesehen sein, dass die Umlenkrollen einen Durchmesser von 80 bis 120 cm, vorzugsweise ca. 100 cm, aufweisen.

Eine einfache Konstruktion des Maschinengestells der erfindungsgemäßen Bandsägemaschine ergibt sich, wenn der Sägehals einen selbsttragenden Rahmen aufweist.

Nachfolgend ist ein Ausführungsbeispiel der Erfindung anhand der Zeichnung prinzipmäßig dargestellt.

Es zeigt:
- Fig. 1: eine erste perspektivische Ansicht einer erfindungsgemäßen Bandsägemaschine;

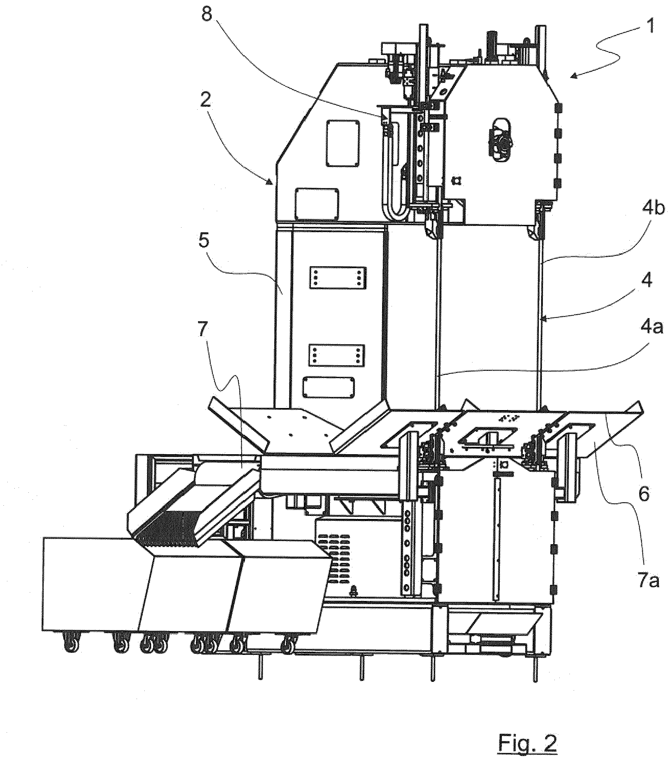

- Fig. 2: eine weitere perspektivische Ansicht der erfindungsgemäßen Bandsägemaschine;
- Fig. 3: eine Vorderansicht der erfindungsgemäßen Bandsägemaschine;

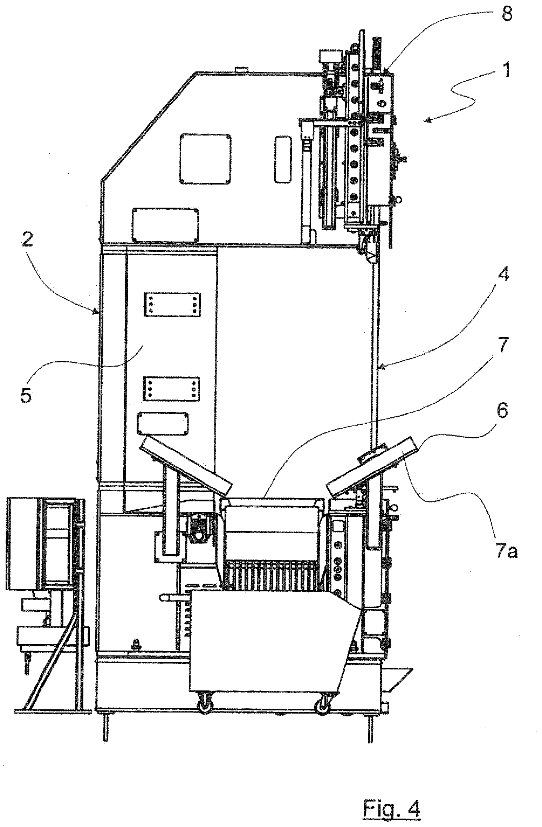

- Fig. 4: eine Seitenansicht der erfindungsgemäßen Bandsägemaschine; und
- Fig. 5: einen zu der erfindungsgemäßen Bandsäge gehörenden Führungsarm.

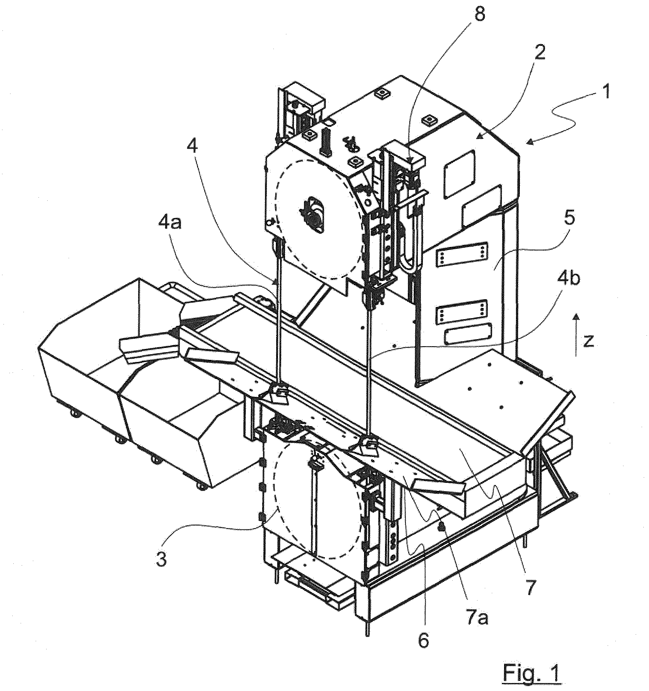

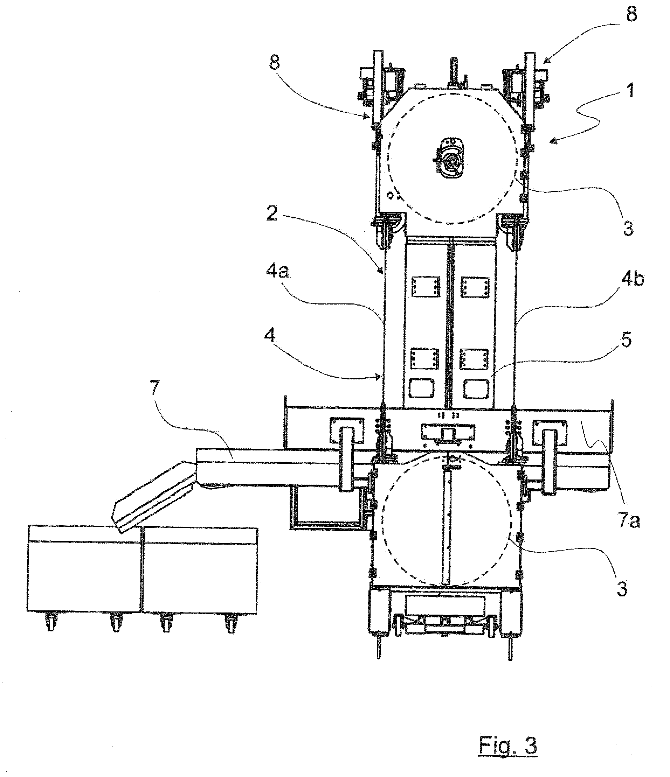

Fig. 1 zeigt eine Bandsägemaschine 1, die ein Maschinengestell 2 aufweist. In dem Maschinengestell 2 sind in den Figuren 1 und 3 mittels gestrichelter Linien nur schematisch angedeutete Umlenkrollen 3 angeordnet. Die beiden Umlenkrollen 3 sind in der mit "z" bezeichneten vertikalen Richtung übereinander angeordnet. Des Weiteren weist die Bandsägemaschine 1 ein um die Umlenkrollen 3 geführtes, endloses Sägeband 4 auf.

Die obere Umlenkrolle 3 wird im vorliegenden Fall von einem Sägehals 5 gehalten, der Teil des Maschinengestells 2 ist. Der Sägehals 5 kann einen selbsttragenden Rahmen aufweisen, der beispielsweise durch eine Blechkonstruktion gebildet ist und in dessen Innerem sich zum Beispiel Versorgungsleitungen befinden können.

Das Sägeband 4 weist einen nach oben laufenden Abschnitt 4a und einen nach unten ablaufenden Abschnitt 4b auf. Im vorliegenden Fall ist, wenn davon ausgegangen wird, dass die Umlenkrollen 3 im Uhrzeigersinn rotieren, der nach oben laufende Abschnitt 4a links und der nach unten laufende Abschnitt 4b rechts angeordnet. Selbstverständlich könnten die in an sich bekannter Weise mittels einer nicht dargestellten, beispielsweise als Elektromotor ausgebildeten Antriebseinrichtung angetriebenen Umlenkrollen 3 auch entgegen dem Uhrzeigersinn rotieren, sodass die Positionen des nach oben laufenden Abschnitts 4a und des nach unten laufenden Abschnitts 4b des Sägebands 4 umgekehrt wären. In diesem Fall müsste die Ausrichtung der Zähne des Sägebands 4 angepasst werden.

Im vorliegenden Fall wird die untere Umlenkrolle 3 mittels einer Antriebseinrichtung angetrieben, wohingegen die obere Umlenkrolle 3 sich im Leerlauf befindet und durch das Sägeband 4 angetrieben wird. Grundsätzlich wäre es jedoch auch möglich, die Antriebseinrichtung so anzuordnen, dass sie die obere Umlenkrolle 3 antreibt.

Die Umlenkrollen 3 sind im Wesentlichen parallel zu einer Vorderkante 6 des Maschinengestells 2 angeordnet. Bei der Vorderkante 6 handelt es sich um den Bereich des Maschinengestells 2, der dem nach hinten versetzten Sägehals 5 gegenüberliegt bzw. der sich auf der gegenüberliegenden Seite des Sägehalses 5 befindet. Im Prinzip kann die Vorderkante 6 jeder vordere Abschluss des Maschinengestells 2 sein. Im vorliegenden Fall handelt es sich um die dem Sägehals 5 abgewandte Seite eines zu einem Förderband 7, dessen Funktion zu einem späteren Zeitpunkt beschrieben wird, gehörenden Späneleitblech 7a. Wenn dieses Späneleitblech 7a nicht vorhanden ist, könnte es sich auch um die vordere Abdeckung der unteren Umlenkrolle 3 bzw. eine den Zugang zu der unteren Umlenkrolle 3 ermöglichenden Tür handeln. Wesentlich an der Anordnung der Umlenkrollen 3 ist, dass dieselben gegenüber bekannten Lösungen um im Wesentlichen 90° verdreht angeordnet sind.

Durch diese Anordnung der Umlenkrollen 3 parallel zu der Vorderkante 6 des Maschinengestells 2 bzw. um 90° verdreht im Vergleich zu bekannten Lösungen liegen sowohl der nach oben laufende Abschnitt 4a als auch der nach unten laufende Abschnitt 4b des Sägebands 4 frei und sind mit ihren nicht dargestellten Schneiden der Vorderkante 6 zugewandt. Grundsätzlich könnte das Sägeband 4 auch umgekehrt montiert werden, sodass die Schneiden in Richtung des Sägehalses 5 zeigen. In diesem Fall können weitere Anpassungen an verschiedenen Bauteilen der Bandsägemaschine 1 erforderlich sein.

Wie bereits erwähnt, ist der Sägehals 5 gegenüber den Umlenkrollen 3 von der Vorderkante 6 nach hinten versetzt angeordnet, sodass zwischen den beiden Abschnitten 4a und 4b des Sägebands 4 ein vergleichsweise großer Freiraum vorhanden ist. Des Weiteren sind sowohl der nach oben laufende Abschnitt 4a als auch der nach unten laufende Abschnitt 4b des Sägebands 4 zwischen den Umlenkrollen 3 zumindest teilweise freigelegt, wodurch beide Abschnitte 4a und 4b zugänglich sind und mehrere nicht dargestellte Werkstücke gleichzeitig mittels des Sägebands 4 gesägt werden können.

Je nach Größe der Bandsägemaschine 1 und des Maschinengestells 2 sind die Umlenkrollen 3 um weniger als 20 cm, vorzugsweise um weniger als 10 cm, gegenüber der Vorderkante 6 des Maschinengestells 2 nach hinten versetzt angeordnet.

Zwischen den Umlenkrollen 3 befindet sich im vorliegenden Fall das im Wesentlichen parallel zu der Vorderkante 6 des Maschinengestells 2 verlaufende Förderband 7, das vorzugsweise im Wesentlichen horizontal verläuft. Mit dem Förderband 7 können Späne und von dem zu bearbeitenden Werkstück abgesägte Teile abtransportiert werden. Des Weiteren kann die Laufrichtung des Förderbands 7 während des Betriebs umgekehrt werden, um beispielsweise aus unterschiedlichen Werkstoffen bestehende Abfallteile in unterschiedliche Richtungen transportieren zu können.

Die Umlenkrollen 3 können einen Durchmesser von 80 - 120 cm, vorzugsweise ca. 100 cm, aufweisen. Dadurch ergibt sich ein entsprechender Freiraum auch zwischen den beiden Abschnitten 4a und 4b des Sägebands 4, sodass mit der Bandsägemaschine 1 auch sehr große Werkstücke gesägt werden können.

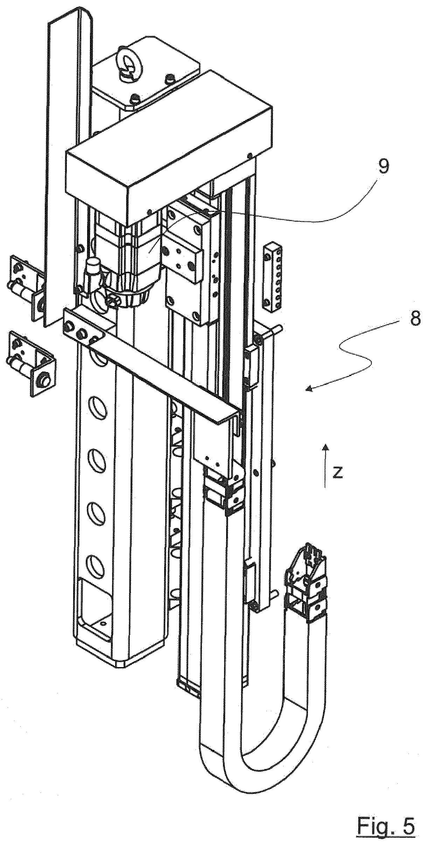

An dem der oberen Umlenkrolle 3 zugewandten Bereich ist das Sägeband 4 im vorliegenden Fall an jeweiligen Führungsarmen 8 geführt. Einer der Führungsarme 8 ist in Fig. 5 detaillierter dargestellt. Dabei ist erkennbar, dass die Führungsarme 8 jeweilige Antriebseinrichtungen 9 aufweisen, mit denen sie in der vertikalen Richtung z verstellt werden können. Dadurch kann die freie Länge der beiden Abschnitte 4a und 4b des Sägebands 4 verändert werden. Die Ansteuerung der Antriebseinrichtung 9 kann mittels einer nicht dargestellten Steuereinrichtung erfolgen, die in an sich bekannter Weise ausgeführt sein kann und die beispielsweise auch die gesamte Steuerung des Betriebs der Bandsägemaschine 1 übernehmen kann.

Die Bandsägemaschine 1 kann Teil einer nicht dargestellten Fertigungsstraße für Werkstücke sein, an denen ein oder mehrere Sägeschnitte vorgenommen werden müssen. In diese Fertigungsstraße können auch ein oder mehrere Mehrachsenroboter integriert sein, die die Werkstücke halten und gegenüber dem Sägeband 4 bewegen, sodass der Sägeschnitt auf die gewünschte Art und Weise durchgeführt wird.

## Patentansprüche

1. Bandsägemaschine (1) mit zwei in vertikaler Richtung (z) übereinander angeordneten Umlenkrollen (3), mit einem um die Umlenkrollen (3) geführten, endlosen Sägeband (4), das einen nach oben laufenden Abschnitt (4a) und einen nach unten laufenden Abschnitt (4b) aufweist, und mit einem Maschinengestell (2), das einen Sägehals (5) zum Halten von wenigstens der oberen Umlenkrolle (3) aufweist,
**dadurch gekennzeichnet, dass**
die Umlenkrollen (3) im Wesentlichen parallel zu einer Vorderkante (6) des Maschinengestells (2) angeordnet sind, sodass sowohl der nach oben laufende Abschnitt (4a) als auch der nach unten laufende Abschnitt (4b) des Sägebands (4) mit ihren Schneiden der Vorderkante (6) zugewandt sind, dass der Sägehals (5) gegenüber den Umlenkrollen (3) von der Vorderkante (6) nach hinten versetzt angeordnet ist, und dass sowohl der nach oben laufende Abschnitt (4a) als auch der nach unten laufende Abschnitt (4b) des Sägebands (4) zwischen den Umlenkrollen (3) zumindest teilweise freigelegt ist.

2. Bandsägemaschine (1) nach Anspruch 1,
**dadurch gekennzeichnet, dass**
die Umlenkrollen (3) um weniger als 20 cm, vorzugsweise um weniger als 10 cm, gegenüber der Vorderkante (6) des Maschinengestells (2) nach hinten versetzt angeordnet sind.

3. Bandsägemaschine nach Anspruch 1 oder 2,
**dadurch gekennzeichnet, dass**
zwischen den Umlenkrollen (3) ein im Wesentlichen parallel zu der Vorderkante (6) des Maschinengestells (2) verlaufendes Förderband (7) angeordnet ist.

4. Bandsägemaschine (1) nach Anspruch 3,
**dadurch gekennzeichnet, dass**
das Förderband (7) im Wesentlichen horizontal ausgerichtet ist.

5. Bandsägemaschine (1) nach einem der Ansprüche 1 bis 4,
**dadurch gekennzeichnet, dass**
das Sägeband (4) in dem der oberen Umlenkrolle (3) zugewandten Bereich an Führungsarmen (8) geführt ist.

6. Bandsägemaschine nach Anspruch 4,
**dadurch gekennzeichnet, dass**
die Führungsarme (8) mittels jeweiliger Antriebseinrichtungen (9) verstellbar sind.

7. Bandsägemaschine nach einem der Ansprüche 1 bis 5,
**dadurch gekennzeichnet, dass**
die Umlenkrollen (3) einen Durchmesser von 80 bis 120 cm, vorzugsweise ca. 100 cm, aufweisen.

8. Bandsägemaschine nach einem der Ansprüche 1 bis 6
**dadurch gekennzeichnet, dass**
der Sägehals (5) einen selbsttragenden Rahmen aufweist.
